# EUROPEAN PATENT SPECIFICATION

(11) **EP 4 227 033 B1**
(45) Date of publication and mention of the grant of the patent: **25.02.2026**
(21) Application number: 23153874.5
(22) Date of filing: 30.01.2023
(51) Int. Cl.: B23K 9/09

(54) **ARC WELDING CONTROL METHOD**
STEUERUNGSVERFAHREN FÜR LICHTBOGENSCHWEISSEN
PROCÉDÉ DE COMMANDE DE SOUDAGE À L'ARC

(30) Priority: 10.02.2022 JP 2022019271
(43) Date of publication of application: 16.08.2023
(73) Proprietor: DAIHEN Corporation, Yodogawa-ku Osaka-shi Osaka 532-8512 (JP)
(72) Inventor: TAKADA, Kento, Osaka, 532-85123 (JP)
(74) Representative: Boult Wade Tennant LLP

(56) References cited:
- JP-B2- 5 349 152
- US-A1- 2007 246 448
- US-A1- 2018 264 576
- US-B2- 10 052 706

## Description

### FIELD

The present disclosure relates to an arc welding control method in which a welding wire is fed.

### BACKGROUND

To achieve high quality welding of thin plates with lower heat input to the base material, the techniques disclosed in WO2018/079345 and JP-A-2021-53649 have been commonly used. According to the AC pulse arc welding method of WO2018/079345, welding is performed by feeding a welding wire and repeating a cycle of applying a peak current and a base current during an electrode-positive polarity period and an electrode-negative polarity current during an electrode-negative polarity period. In this AC pulse arc welding, heat input to the base material can be controlled by adjusting the length of the electrode-negative polarity period to change the time ratio of the electrode-negative polarity period to the length of one cycle. This enables proper low-heat-input welding to be performed, whereby thin sheets can be welded with high quality.

According to the welding method of JP-A-2021-53649, welding is performed by feeding a welding wire and alternately switching between a period of pulse arc welding and a period of short-circuit transfer arc welding. In this welding method, heat input to the base material can be controlled by adjusting the time ratio between the pulse arc welding period and the short-circuit transfer arc welding period. This also enables proper low-heat-input welding to be performed, whereby thin sheets can be welded with high quality.
US 2018/264576 A1 discloses an arc welder which includes a welding power supply, a forward/reverse welding wire feeder, and a controller for the power supply and the wire feeder. Welding is implemented by repeating unit welding steps each including a short circuit stage with the welding wire and a base material being short-circuited and an arc stage with an arc being generated between the wire and the material. A transition period continues from a starting point of the arc stage till the wire feeding rate reaches a forward maximum. An average welding current is defined as an average of the welding current during the short circuit and arc stages. Within the transition period, the controller sets a current suppression period during which welding current is smaller than the average welding current. Transition period length T0 and current suppression period length T1 are set to satisfy the inequality 0<T1/T0≤0.8.
JP 5 349 152 B2 discloses a method for controlling alternative current pulse arc welding, in which an electrode negative peak current flows during an electrode negative peak period; then an electrode positive peak current flows during an electrode positive peak period; then an electrode positive base current flows during an electrode positive base period; and an electrode negative base current flows during an electrode negative base period.

### SUMMARY

For welding thin sheets with a gap in the weld joint, it is necessary to form a bead with a small dilution ratio, i.e., having a small penetration portion (melt-in portion) and a large reinforcement portion (excess weld-metal portion). However, high quality welding of thin sheets across a relatively large gap may be difficult with conventional welding methods, including those discussed above.

In view of the above, an aim of the present disclosure is to provide an arc welding control method that enables high quality welding of thin sheets having a relatively large gap at a joint to be welded.

To address the issues noted above, an arc welding control method is provided according to claim 1.

Preferably, switching to the electrode-negative polarity is made at a start of the first arc period or at a delayed time from the start of the first arc period.

Preferably, switching to the electrode-negative polarity is made at a time in the short-circuit period.

Preferably, polarity switching is made while an absolute value of the welding current is equal to or smaller than a reference value.

The welding wire is fed backward during the short-circuit period, and fed forward during the arc period.

The present disclosure enables high quality welding of thin sheets having a relatively large gap at a joint to be welded.

### DRAWINGS

Fig. 1 is a block diagram of an arc welding device for performing an arc welding control method according to an embodiment of the present disclosure.
Fig. 2 is a timing chart showing signals of the arc welding device of Fig. 1, illustrating an arc welding control method according to an embodiment of the present disclosure.
Fig. 3 is a timing chart showing signals of the arc welding device of Fig. 1, illustrating an arc welding control method according to another embodiment of the present disclosure.

### EMBODIMENTS

Preferred embodiments of the present disclosure are described below with reference to the accompanying drawings.

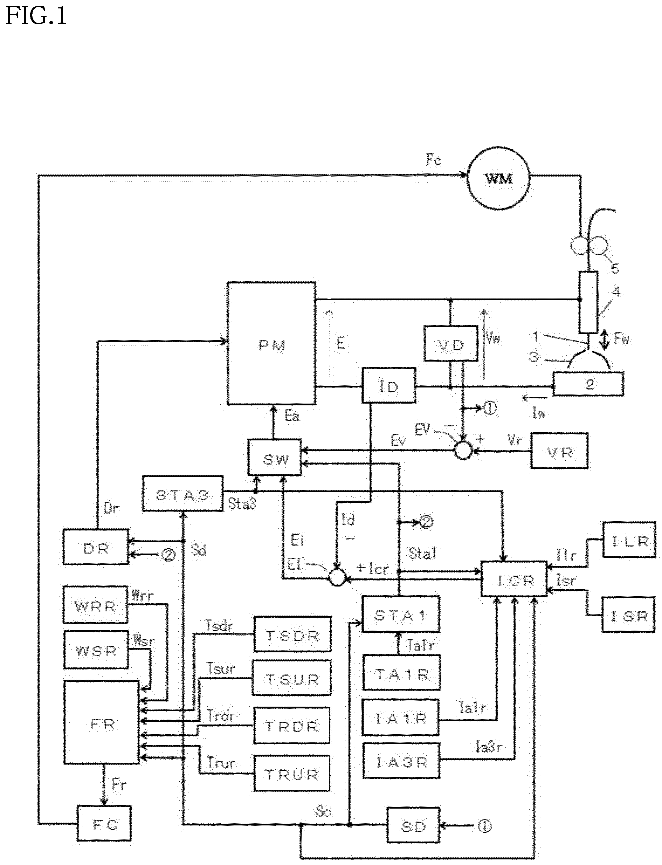

Fig. 1 is a block diagram of an arc welding device for performing an arc welding control method according to an embodiment of the present disclosure. Note that Fig. 1 omits a circuit provided for achieving smooth polarity switching by applying a high voltage of several hundred volts across a welding wire 1 and a base material 2 for a short time. The following describes each block illustrated in Fig. 1.

A power control circuit PM receives an input from a commercial power source (not shown) such as a three-phase 200 V source and outputs a welding voltage Vw and a welding current Iw across the welding wire 1 and the base material 2. Specifically, the power control circuit PM performs output control, such as inverter control, based on an error amplification signal Ea (described later), so that the output is switched between an electrode-positive polarity EP and an electrode-negative polarity EN based on a polarity switching signal Dr described later. Although not illustrated, the power control circuit PM includes: a primary rectifier for rectifying alternating current supplied from the commercial power source; a smoothing capacitor for smoothing the rectified direct current; an inverter circuit driven by the error amplification signal Ea mentioned above to convert the smoothed direct current into high-frequency alternating current; a high-frequency transformer for reducing the voltage of the high-frequency alternating current to a suitable voltage for welding; a secondary rectifier for rectifying the resulting high-frequency alternating current to direct current; a reactor for smoothing the rectified direct current; and a secondary inverter circuit for converting the smoothed direct current into alternating current of several tens to hundreds of Hz based on the polarity switching signal Dr mentioned above.

A feed motor WM receives a feed control signal Fc (described later) as an input and feeds the welding wire 1 at a feed speed Fw to alternate between forward feeding and backward feeding. In another example, the feed motor WM may feed the welding wire 1 at a predetermined constant speed. The feed motor WM may be implemented by a motor with fast transient response. For the feed speed Fw of the welding wire 1 to be changed at a higher rate and for the feeding direction to be reversed more rapidly, the feed motor WM may be positioned closer to the tip of a welding torch 4. In one example, two feed motors WM may be employed to provide a push-pull feeding system.

The welding wire 1 is fed through the welding torch 4 by the rotation of a feed roll 5 coupled to the feed motor WM. An arc 3 is generated between the welding wire 1 and the base material 2. A welding voltage Vw is applied across the welding wire 1 and the base material 2 to pass a welding current Iw through them. The welding wire 1 may be a steel wire, an aluminum wire, for example. A shield gas (not shown) is ejected from the tip of the welding torch 4.

A current detection circuit ID detects the absolute value of the welding current Iw and outputs a current detection signal Id.

A voltage detection circuit VD detects the absolute value of the welding voltage Vw and outputs a voltage detection signal Vd. A voltage setting circuit VR outputs a voltage setting signal Vr for setting the welding voltage Vw applied during a second arc period.

A voltage error amplification circuit EV receives the voltage setting signal Vr and the voltage detection signal Vd, and amplifies the error between the values of the respective input signals to output a voltage error amplification signal Ev.

A short-circuiting determination circuit SD receives the voltage detection signal Vd and outputs a short-circuiting determination signal Sd. Specifically, when the value of the voltage detection signal Vd is less than a predetermined short-circuiting determination value (about 10 V for example), the short-circuiting determination circuit SD determines that the welding operation is in a short-circuit period and thus outputs the short-circuiting determination signal Sd at High level (i.e., a High-level short-circuiting determination signal). Otherwise (i.e., not less than the predetermined short-circuiting determination value), the short-circuiting determination circuit SD determines that that the welding operation is in an arc circuit period and thus outputs the short-circuiting determination signal Sd at Low level (i.e., a Low-level short-circuiting determination signal).

A forward-feed acceleration period setting circuit TSUR outputs a predetermined forward-feed acceleration period setting signal Tsur.

A forward-feed deceleration period setting circuit TSDR outputs a predetermined forward-feed deceleration period setting signal Tsdr.

A backward-feed acceleration period setting circuit TRUR outputs a predetermined backward-feed acceleration period setting signal Trur.

A backward-feed deceleration period setting circuit TRDR outputs a predetermined backward-feed deceleration period setting signal Trdr.

A forward-feed peak value setting circuit WSR outputs a predetermined forward-feed peak value setting signal Wsr.

A backward-feed peak value setting circuit WRR outputs a predetermined backward-feed peak value setting signal Wrr.

A feed-speed setting circuit FR receives the forward-feed acceleration period setting signal Tsur, the forward-feed deceleration period setting signal Tsdr, the backward-feed acceleration period setting signal Trur, the backward-feed deceleration period setting signal Trdr, the forward-feed peak value setting signal Wsr, the backward-feed peak value setting signal Wrr and the short-circuiting determination signal Sd. Based on these input signals, the feed-speed setting circuit FR outputs a feed-speed setting signal Fr representing a feed-speed pattern generated through the following processing. Note that the time during which the feed-speed setting signal Fr has a value equal to or greater than 0 corresponds to a forward-feed period, whereas the time during which the feed-speed setting signal Fr has a value less than 0 corresponds to a backward-feed period.
(1) During a forward-feed acceleration period Tsu determined by the forward-feed acceleration period setting signal Tsur, the feed-speed setting signal Fr rises (accelerates) from 0 to a forward-feed peak value Wsp, which is a positive value determined by the forward-feed peak value setting signal Wsr.
(2) During a subsequent forward-feed peak period Tsp, the feed-speed setting signal Fr is held at the forward-feed peak value Wsp.
(3) When the short-circuiting determination signal Sd changes from Low level (the arc period) to High level (the short-circuit period), a forward-feed deceleration period Tsd determined by the forward-feed deceleration period setting signal Tsdr starts. During the forward-feed deceleration period Tsd, the feed-speed setting signal Fr falls (decelerates) from the forward-feed peak value Wsp to 0.
(4) During a subsequent backward-feed acceleration period Tru determined by the backward-feed acceleration period setting signal Trur, the feed-speed setting signal Fr falls (accelerates) from 0 to a backward-feed peak value Wrp, which is a negative value determined by the backward-feed peak value setting signal Wrr.
(5) During a subsequent backward-feed peak period Trp, the feed-speed setting signal Fr is held at the backward-feed peak value Wrp.
(6) When the short-circuiting determination signal Sd changes from High level (the short-circuit period) to Low level (the arc period), a backward-feed deceleration period Trd determined by the backward-feed deceleration period setting signal Trdr starts. During the backward-feed deceleration period Trd, the feed-speed setting signal Fr rises (decelerates) from the backward-feed peak value Wrp to 0.
(7) By repeating (1) to (6) described above, the feed-speed setting circuit FR generates the feed-speed setting signal Fr representing a feed-speed pattern that is alternately positive and negative in a trapezoidal waveform.

A feed control circuit FC receives the feed-speed setting signal Fr and outputs a feed control signal Fc to the feed motor WM for feeding the welding wire 1 at the feed speed Fw corresponding to the value of the feed-speed setting signal Fr.

A low-level current setting circuit ILR outputs a predetermined low-level current setting signal Ilr.

A short-circuit current setting circuit ISR outputs a predetermined short-circuit current setting signal Isr.

A first arc period setting circuit TA1R outputs a predetermined first arc period setting signal Ta1r.

A first arc period circuit STA1 receives the short-circuiting determination signal Sd and the first arc period setting signal Ta1r and outputs a first arc period signal Sta1. The first arc period signal Sta1 is output at High level (i.e., kept constant at the high level) during a first arc period Ta1 after the short-circuiting determination signal Sd is changed to Low level (the arc period), where the duration of the first arc period Ta1 is determined by the predetermined first arc period setting signal Ta1r.

A first arc current setting circuit IA1R outputs a predetermined first arc current setting signal Ia1r.

A third arc period circuit STA3 receives the short-circuiting determination signal Sd and outputs a third arc period signal Sta3. The third arc period signal Sta3 is switched to High level on the expiration of a predetermined current drop time Td from a transition of the short-circuiting determination signal Sd to Low level (the arc period). The third arc period signal Sta3 is then switched to Low level upon a transition of the short-circuiting determination signal Sd to High level (the short-circuit period).

A third arc current setting circuit IA3R outputs a predetermined third arc current setting signal la3r.

A current control setting circuit ICR receives the short-circuiting determination signal Sd, the low-level current setting signal Ilr, the short-circuit current setting signal Isr, the first arc period signal Sta1, the third arc period signal Sta3, the first arc current setting signal Ia1r and the third arc current setting signal la3r. Based on these input signals, the current control setting circuit ICR outputs a current control setting signal Icr through the following processing.
(1) The current control setting signal Icr is held at the value of the low-level current setting signal llr during a predetermined delay period Tc that starts from the time when the short-circuiting determination signal Sd changes to Low level (the arc period) and ends, in an embodiment, when the first arc period signal Sta1 changes to High level.
(2) Thereafter, the current control setting signal Icr is held at the value of the first arc current setting signal Ia1r.
(3) Thereafter, the current control setting signal Icr is decreased to a predetermined switching current value.
(4) The current control setting signal Icr is held at the value of the third arc current setting signal la3r during the time from a transition of the first arc period signal Sta1 to Low level to a transition of the third arc period signal Sta3 to Low level (during the second and third arc periods).
(5) The current control setting signal Icr is held at the value of the short-circuit current setting signal Isr during the time the short-circuiting determination signal Sd is held at High level (the short-circuit period).

A current error amplification circuit El receives the current control setting signal Icr and the current detection signal Id, and amplifies the error between the values of the respective input signals to output the result as a current error amplification signal Ei.

A power source characteristic switching circuit SW receives the current error amplification signal Ei, the voltage error amplification signal Ev, the first arc period signal Sta1 and the third arc period signal Sta3. Based on these input signal, the power source characteristic switching circuit SW outputs the error amplification signal Ea through the following processing.
(1) The voltage error amplification signal Ev is output as the error amplification signal Ea during the second arc period Ta2. The second arc period Ta2 starts at a transition of the first arc period signal Sta1 to Low level and ends at a transition of the third arc period signal Sta3 changes to High level.
(2) During the other periods, the current error amplification signal Ei is output as the error amplification signal Ea.

By this circuit, the welding power source is provided with constant current characteristics during the short-circuit period, the first arc period Ta1 and the third arc period Ta3, while being provided with constant voltage characteristics during the second arc period Ta2.

A polarity switching circuit DR receives the first arc period signal Sta1 and the short-circuiting determination signal Sd and outputs a polarity switching signal Dr through one of the processes (1) to (3) below. Note that the output of the welding power source is set to the electrode-negative polarity EN when the polarity switching signal Dr is at High level, and to the electrode-positive polarity EP when the polarity switching signal Dr is at Low level.
(1) The polarity switching signal Dr is changed to High level (the electrode-negative polarity EN) on a transition of the first arc period signal Sta1 to High level, and changed to Low level (the electrode-positive polarity EP) on a transition of the first arc period signal Sta1 to Low level.
(2) The polarity switching signal Dr is changed to High level (the electrode-negative polarity EN) on the expiration of the delay period Tc, and changed to Low level (the electrode-positive polarity EP) on a transition of the first arc period signal Sta1 to Low level.
(3) The polarity switching signal Dr is changed to High level (the electrode-negative polarity EN) on the expiration of a predetermined time period from a transition of the short-circuiting determination signal Sd to High level, and changed to Low level (the electrode-positive polarity EP) on a transition of the first arc period signal Sta1 to Low level.

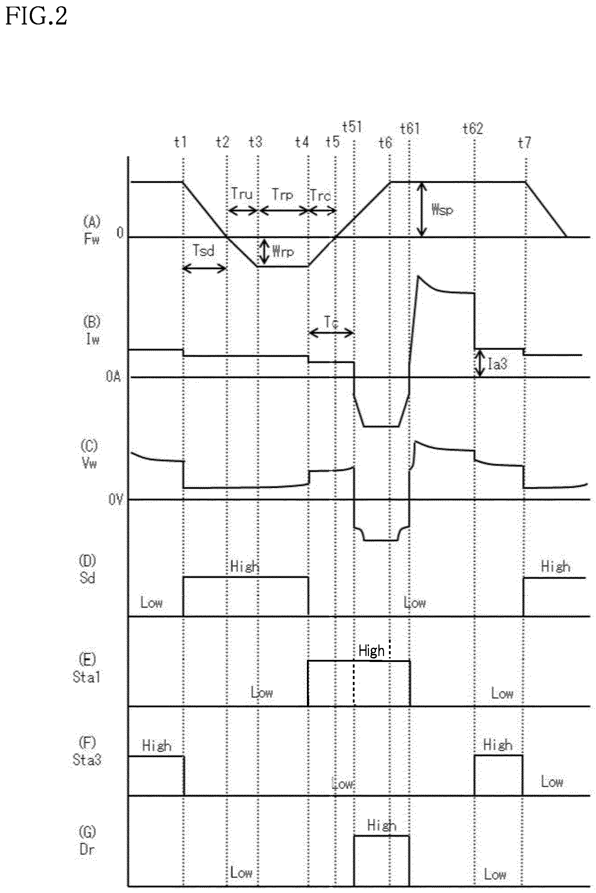

Fig. 2 is a timing chart showing signals of the arc welding device of Fig. 1, illustrating an arc welding control method according to an embodiment of the present disclosure. The figure shows the change over time of: (A) the feed speed Fw; (B) the welding current Iw; (C) the welding voltage Vw; (D) the short-circuiting determination signal Sd; (E) the first arc period signal Sta1; (F) the third arc period signal Sta3; and (G) the polarity switching signal Dr. With reference to this figure, the following describes the change of each signal over time.

When the feed speed Fw shown in (A) of Fig. 2 has a positive value, forward feeding is performed to advance the welding wire 1 toward the base material. When the feed speed Fw has a negative value, backward feeding is performed to retract the welding wire 1 away from the base material 2. The feed speed Fw is controlled to the value of the feed-speed setting signal Fr output from the feed-speed setting circuit FR shown in Fig. 1. The feed speed Fw is controlled in a cycle composed of: the forward-feed acceleration period Tsu determined by the forward-feed acceleration period setting signal Tsur shown in Fig. 1; the forward-feed peak period Tsp that continues until a short-circuit occurs; the forward-feed deceleration period Tsd determined by the forward-feed deceleration period setting signal Tsdr shown in Fig. 1; the backward-feed acceleration period Tru determined by the backward-feed acceleration period setting signal Trur shown in Fig. 1; the backward-feed peak period Trp that continues until an arc occurs; and the backward-feed deceleration period Trd determined by the backward-feed deceleration period setting signal Trdr shown in Fig. 1. In addition, the forward-feed peak value Wsp is determined by the forward-feed peak value setting signal Wsr shown in Fig. 1, and the backward-feed peak value Wrp is determined by the backward-feed peak value setting signal Wrr shown in Fig. 1. The feed-speed setting signal Fr is therefore changed in a feed-speed pattern that is alternately positive and negative in a substantially trapezoidal waveform. The waveforms of the welding current Iw and the welding voltage Vw shown in (B) and (C) of Fig. 2 correspond to the electrode-positive polarity EP when their values are positive and to the electrode-negative polarity EN when their values are negative.

### [Processing during Short-Circuit Period from Time t1 to t4]

During a short-circuit period, the polarity switching signal Dr is held at Low level as shown in (G) of Fig. 2, so that the output of the welding power source is set to the electrode-positive polarity EP. Consequently, as shown in (B) and (C) of Fig. 2, the welding current Iw and the welding voltage Vw have a positive value during the short-circuit period. When a short-circuit occurs at time t1 in the forward-feed peak period Tsp, the welding voltage Vw rapidly decreases to a short-circuit voltage value of several volts, as shown in (C) of Fig. 2. This triggers a transition of the short-circuiting determination signal Sd to High level (the short-circuit period), as shown in (D) of Fig. 2. In response, the predetermined forward-feed deceleration period Tsd takes place from time t1 to t2, during which the feed speed Fw is decelerated from the forward-feed peak value Wsp to 0 as shown in (A) of Fig. 2.

Then, the predetermined backward-feed acceleration period Tru takes place from time t2 to t3, during which the feed speed Fw is accelerated from 0 to the backward-feed peak value Wrp as shown in (A) of Fig. 2. The short-circuit period continues during this period.

When the backward-feed acceleration period Tru ends at time t3, the backward-feed peak period Trp takes place, during which the feed speed Fw is held at the backward-feed peak value Wrp as shown in (A) of Fig. 2. The backward-feed peak period Trp continues until an arc occurs at time t4. Thus, the period from time t1 to t4 corresponds the to short-circuit period.

During the short-circuit period from t1 to t4, the instantaneous value of the welding current Iw is maintained at the value of the short-circuit current setting signal Isr shown in Fig. 1 by constant current control as shown in (B) of Fig. 2. The short-circuit current setting signal Isr is set to the value equal to less than the average of the welding current Iw. The average of the welding current Iw is substantially determined by the average of the feed speed Fw. Preferably, the short-circuit current setting signal Isr is set to 100 A or less, and more preferably to 70 A or less. Controlling the welding current Iw to a small value during the short-circuit period serves to reduce spatter at the time of short-circuiting and promotes a smooth transfer of a droplet to a weld pool. In addition, unlike the conventional techniques, the welding current Iw at the time of arc regeneration can be controlled to a smaller value without the need to perform constriction detection, so that spatter at the time of arc regeneration can be greatly reduced. The present embodiment does not require constriction detection and therefore not require e.g., a lead or wire for detecting the voltage of an arc generating region. According to the conventional techniques, the maximum instantaneous value of welding current Iw is set to 400 A or more. Such a large current is required to generate a pinch force acting on the droplet to form a constriction for breaking break the short-circuit. In contrast, the present embodiment forms a constriction in the droplet for breaking the short-circuit, by feeding the welding wire backward at high speed rather than by a pinch force. The present embodiment can therefore reduce the welding current Iw during the short-circuit period to a lower value than in the conventional techniques.

### [Processing during Arc Period from Time t4 to t7]

As the constriction in the droplet develops by feeding the welding wire backward, an arc occurs at time t4. This causes the welding voltage Vw to rapidly increase to an arc voltage value of several tens of volts as shown in (C) of Fig. 2, so that the short-circuiting determination signal Sd changes to Low level (the arc period) as shown in (D) of Fig. 2. In response, the first arc period signal Sta1 changes to High level as shown in (E) of Fig. 2. Thus, the period from time t4 to t61 corresponds to the predetermined first arc period Ta1. The duration of the first arc period Ta1 is set by the first arc period setting signal Ta1r shown in Fig. 1. During the first arc period Ta1, constant current control is performed. Concurrently, the backward-feed deceleration period Trd of a predetermined duration takes place from time t4 to t5 during which the feed speed Fw is decelerated from the backward-feed peak value Wrp to 0 as shown (A) of Fig. 2.

When the backward-feed deceleration period Trd ends at time t5, the predetermined forward-feed acceleration period Tsu takes place from time t5 to t6. During the forward-feed acceleration period Tsu, the feed speed Fw is accelerated from 0 to the forward-feed peak value Wsp as shown in (A) of Fig. 2. The arc period continues during this period.

When the forward-feed acceleration period Tsu ends at time t6, the forward-feed peak period Tsp starts during which the feed speed Fw is held at the forward-feed peak value Wsp as shown in (A) of Fig. 2. The arc period still continues during this period. The forward-feed peak period Tsp continues until a short-circuit occurs at time t7. That is, the period from time t4 to t7 corresponds to the arc period. Upon occurrence of a short-circuit, the process goes back to time t1.

When an arc occurs at time t4, the welding voltage Vw rapidly increases to an arc voltage of several tens of volts as shown in (C) of Fig. 2. On the other hand, the welding current Iw is held at the value of the low-level current setting signal Ilr shown in Fig. 1 for the duration of the predetermined delay period Tc from time t4 as shown in (B) of Fig. 2. This delay is provided to avoid increasing the welding current Iw immediately after the occurrence of an arc, which may unduly cause a rapid increase of the arc length as a result of both the retraction of the welding wire and the melting of the welding wire by the otherwise increased welding current. Unfavorably such a rapid increase of the arc length may result in unstable welding. In an other embodiment, however, the delay period Tc may be set to 0.

At time t51 in the forward-feed acceleration period Tsu, the delay period Tc ends and the polarity switching signal Dr changes to High level. Thus, the output of the welding power source is switched to the electrode-negative polarity EN. When the delay period Tc is set to zero (Tc = 0), the output is changed to the electrode-negative polarity EN at time t4. In response, the welding current Iw decreases to the negative, low-level current value as shown in (B) of Fig. 2, and the welding voltage Vw also decreases to a negative arc voltage value as shown in (C) of Fig. 2. As shown in (B) of Fig. 2, the welding current Iw starts to increase at time t51 to the first arc current value Ia1 set by the first arc current setting signal Ia1r and remains at the value. Thereafter, the welding current Iw decreases to reach the predetermined switching current value at time t61. As shown in (C) of Fig. 2, the welding voltage Vw has a waveform similar to that of the welding current Iw. The welding current Iw is reduced to the switching current value of about 50 to 100A for avoiding polarity switching of a large current, which may cause an excessive surge voltage to be applied and damage the transistor of the secondary inverter circuit in the power control circuit PM shown in Fig. 1.

When the first arc period Ta1 ends at time t61, the polarity switching signal Dr changes to Low level as shown in (G) of Fig. 2, so that the output of the welding power source is switched to the electrode-positive polarity EP. In response, the welding current Iw increases to the positive, switching current value as shown in (B) of Fig. 2, and the welding voltage Vw also increases a positive arc voltage value as shown in (C) of Fig. 2. The period from time t61 to t62 corresponds to the second arc period Ta2, during which the welding power source is controlled by constant voltage control. Thus, as shown in (B) of Fig. 2, the second arc current la2 varies according to the arc load, whereas the welding voltage Vw shown in (C) of Fig. 2 is controlled to the value determined by the voltage setting signal Vr of Fig. 1. By using constant voltage control during the second arc period Ta2, the arc length is adjusted to an appropriate value.

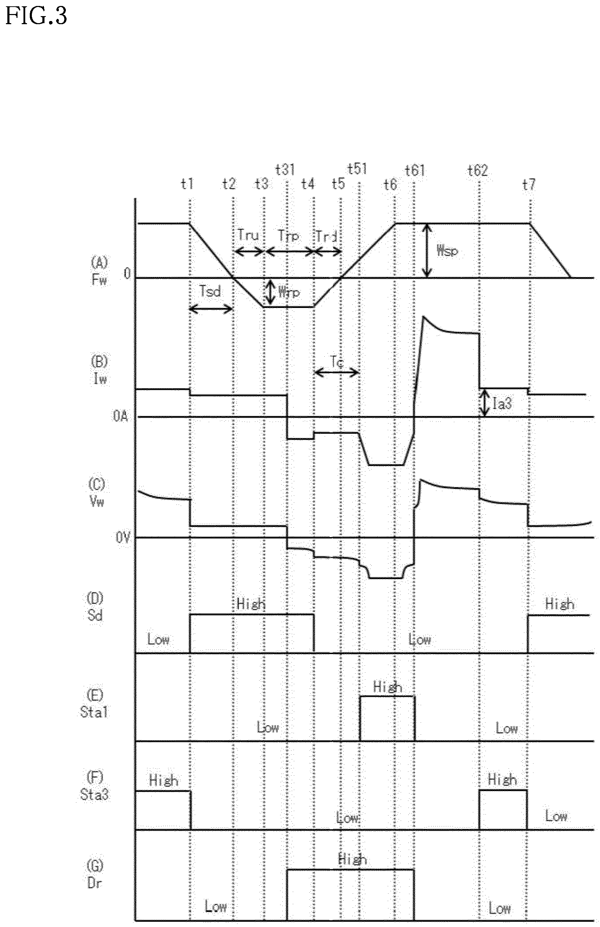

On the expiration of the predetermined current drop time Td at time t62 from the occurrence of an arc at time t4, the third arc period signal Sta3 changes to High level as shown in (F) of Fig. 2. The time period from t62 until a short-circuit of the next cycle occurs at time t7 corresponds to the third arc period Ta3. During the third arc period Ta3, the polarity switching signal Dr remains at Low level as shown in (G) of Fig. 2, so that the output of the welding power source is set to the electrode-positive polarity EP. During the third arc period Ta3, constant current control is performed. Thus, as shown in (B) of Fig. 2, the welding current Iw remains constant at the third arc current la3 determined by the third arc current setting signal la3r shown in Fig. 1. On the other hand, the welding voltage Vw takes the value determined according to the current value and the arc load as shown in (C) of Fig. 3. Controlling the welding current Iw to a small third current value la3 immediately before short-circuiting helps occurrence of a short-circuit and reduces spatter at the time of short-circuiting.

The following gives a list of example values of the parameters described above. Short-circuit period (not a predetermined value): 3 ms; Arc period (not a predetermined value): 4 ms; Delay period Tc (predetermined value): 0.5 ms; First arc period Ta1 (predetermined value): 1.5 ms; Second arc period Ta2 (not a predetermined value): 2 ms; Third arc period Ta3 (not a predetermined value): 0.5 ms; Current drop time (predetermined value): 3.5 ms; Low-level current value (predetermined value): 50 A; First arc current value Ia1 (predetermined value): -150 A; Third arc current value la3 (predetermined value): 50 A; Forward-feed peak value Wsp (predetermined value): 30 m/min; and Backward-feed peak value Wrp (predetermined value): -25 m/min.

According to the embodiment described above, the electrode-negative polarity EN is used during the first arc period, whereas the electrode-positive polarity EP is used during the other periods. That is, during the first period, welding is performed with the electrode-negative polarity EN, so that a relatively large droplet can form on the welding wire with a low heat input to the base material. A larger droplet can fill a larger gap. As a result, thin sheets can be welded together to form a high quality joint even if a relatively large gap is present at a joint to be welded.

Fig. 3 is a timing chart showing signals of the arc welding device of Fig. 1, illustrating an arc welding control method according to an embodiment different from that of Fig. 2. The figure shows the change over time of: (A) the feed speed Fw; (B) the welding current Iw; (C) the welding voltage Vw; (D) the short-circuiting determination signal Sd; (E) the first arc period signal Sta1; (F) the third arc period signal Sta3; and (G) the polarity switching signal Dr. The method shown in Fig. 3 differs from the method shown in Fig. 2 in the processing during the time t3 to t61. The processing during the other periods is the same as the processing shown in Fig. 2. With reference to this figure, the following describes the processing different from the processing shown in Fig. 2.

The processing to control the feed speed Fw shown in (A) of Fig. 3 is the same as that shown in Fig. 2, so that the description thereof will not be repeated.

At time t31 upon which a predetermined time period expires from the start of the short-circuit period at time t1, the polarity switching signal Dr is changed from Low level to High level as shown in (G) of Fig. 3, so that the output of the welding power source is switched to the electrode-negative polarity EN. In response, the welding current Iw changes from a positive short-circuit current value to a negative short-circuit current value as shown in (B) of Fig. 3. Similarly, the welding voltage Vw changes from a positive short-circuit voltage value to a negative short-circuit voltage value as shown in (C) of Fig. 3. The predetermined time period mentioned above is set to 1 to 2.5 ms or so, for ensuring that the polarity change occurs at some time in the short-circuit period having a duration of at least 3 ms. Generally, it takes about 1 ms for the molten droplet and molten pool to stabilize after the start of the short-circuit period. It is therefore desirable to switch the polarity after this time period.

As the constriction in the droplet develops by feeding the welding wire backward, an arc occurs at time t4. This causes the welding voltage Vw to rapidly increase to an arc voltage value of several tens of volts as shown in (C) of Fig. 3, so that the short-circuiting determination signal Sd changes to Low level (the arc period) as shown in (D) of Fig. 3. In response, the first arc period signal Sta1 changes to High level as shown in (E) of Fig. 3, and the predetermined first arc period Ta1 takes place from time t4 to t61. During the first arc period, the polarity switching signal Dr remains at High level as shown in (G) of Fig. 3, so that the output of the welding power source remains set to the electrode-negative polarity EN. During the first arc period Ta1, constant current control is continued. As shown in (B) of Fig. 3, the welding current Iw is held at the value of the low-level current setting signal Ilr shown in Fig. 1 during the predetermined delay period Tc from time t4.

When the delay period Tc ends at time t51, as shown in (B) Fig. 2, the welding current Iw starts to increase at time t51 to the first arc current value Ia1 set by the first arc current setting signal Ia1r and remains at the value. Thereafter, the welding current Iw decreases to the predetermined switching current value at time t61. As shown in (C) of Fig. 3, the welding voltage Vw has a waveform similar to that of the welding current Iw.

When the first arc period Ta1 ends at time t61, the polarity switching signal Dr changes to Low level as shown in (G) of Fig. 3, so that the output of the welding power source is switched to the electrode-positive polarity EP. In response, the welding current Iw increases to the positive, switching current value as shown in (B) of Fig. 3, and the welding voltage Vw also increases a positive arc voltage value as shown in (C) of Fig. 3. The period from time t61 to t62 corresponds to the second arc period Ta2 during which the welding power source is controlled by constant voltage control. The processing thereafter is the same as that shown in Fig. 2 and thus the description thereof is not repeated.

Since the polarity is switched in the short-circuit period during which no arc is generated, there is no risk of arc breaking and thus smooth polarity switching is ensured.

### REFERENCE NUMERALS

1: Welding wire
2: Base material
3: Arc
4: Welding torch
5: Feed roll
DR: Polarity switching circuit
Dr: Polarity switching signal
Ea: Error amplification signal
El: Current error amplification circuit
Ei: Current error amplification signal
EV: Voltage error amplification circuit
Ev: Voltage error amplification signal
FC: Feed control circuit
Fc: Feed control signal
FR: Feed-speed setting circuit
Fr: Feed-speed setting signal
Fw: Feed speed
la1: First arc current
IA1R: First arc current setting circuit
Ia1r: First arc current setting signal
la2: Second arc current
la3: Third arc current
IA3R: Third arc current setting circuit
la3r: Third arc current setting signal
ICR: Current control setting circuit
Icr: Current control setting signal
ID: Current detection circuit
Id: Current detection signal
ILR: Low-level current setting circuit
Ilr: Low-level current setting signal
ISR: Short-circuit current setting circuit
Isr: Short-circuit current setting signal
Iw: Welding current
PM: Power control circuit
SD: Short-circuiting determination circuit
Sd: Short-circuiting determination signal
STA1: First arc period circuit
Sta1: First arc period signal
STA3: Third arc period circuit
Sta3: Third arc period signal
SW: Power source characteristic switching circuit
TA1R: First arc period setting circuit
Ta1r: First arc period setting signal
Tc: Delay period
Td: Current drop time
Trd: Backward-feed deceleration period
TRDR: Backward-feed deceleration period setting circuit
Trdr: Backward-feed deceleration period setting signal
Trp: Backward-feed peak period
Tru: Backward-feed acceleration period
TRUR: Backward-feed acceleration period setting circuit
Trur: Backward-feed acceleration period setting signal
Tsd: Forward-feed deceleration period
TSDR: Forward-feed deceleration period setting circuit
Tsdr: Forward-feed deceleration period setting signal
Tsp: Forward-feed peak period
Tsu: Forward-feed acceleration period
TSUR: Forward-feed acceleration period setting circuit
Tsur: Forward-feed acceleration period setting signal
VD: Voltage detection circuit
Vd: Voltage detection signal
VR: Voltage setting circuit
Vr: Voltage setting signal
Vw: Welding voltage
WM: Feed motor
Wrp: Backward-feed peak value
WRR: Backward-feed peak value setting circuit
Wrr: Backward-feed peak value setting signal
Wsp: Forward-feed peak value
WSR: Forward-feed peak value setting circuit
Wsr: Forward-feed peak value setting signal

## Claims

1. An arc welding control method comprising:
feeding a welding wire (1); and
repeating a short-circuit period and an arc period, the arc period comprising a first arc period (Ta1) and a second arc period (Ta2) following the first arc period (Ta1), wherein a welding current (Iw) is applied using constant current control during the first arc period (Ta1),
the welding current (Iw) is applied using constant voltage control during the second arc period (Ta2), and
the first arc period (Ta1) is set to an electrode-negative polarity, and the second arc period (Ta2) is set to an electrode-positive polarity at a start of the second arc period (Ta2),
wherein the welding wire (1) is fed backward during the short-circuit period and fed forward during the arc period.

2. The arc welding control method according to claim 1, wherein switching to the electrode-negative polarity is made at a start of the first arc period (Ta1) or at a delayed time (Tc) from the start of the first arc period (Ta1).

3. The arc welding control method according to claim 1, wherein switching to the electrode-negative polarity is made at a time in the short-circuit period.

4. The arc welding control method according to any one of claims 1 to 3, wherein polarity switching is made while an absolute value of the welding current (Iw) is equal to or smaller than a reference value.

## Patentansprüche

1. Verfahren zur Steuerung eines Lichtbogenschweißens, umfassend:
Zuführen eines Schweißdrahtes (1); und
Wiederholen einer Kurzschlussperiode und einer Lichtbogenperiode, wobei die Lichtbogenperiode eine erste Lichtbogenperiode (Ta1) und eine zweite Lichtbogenperiode (Ta2) umfasst, die auf die erste Lichtbogenperiode (Ta1) folgt, wobei während der ersten Lichtbogenperiode (Ta1) ein Schweißstrom (Iw) unter Verwendung einer Konstantstromsteuerung angelegt wird,
der Schweißstrom (Iw) während der zweiten Lichtbogenperiode (Ta2) unter Verwendung einer Konstantspannungssteuerung angelegt wird, und
die erste Lichtbogenperiode (Ta1) auf eine elektroden-negative Polarität und die zweite Lichtbogenperiode (Ta2) zu Beginn der zweiten Lichtbogenperiode (Ta2) auf eine elektroden-positive Polarität eingestellt wird, wobei der Schweißdraht (1) während der Kurzschlussperiode rückwärts und während der Lichtbogenperiode vorwärts zugeführt wird.

2. Verfahren zur Steuerung eines Lichtbogenschweißens gemäß Anspruch 1, wobei die Umschaltung auf die elektroden-negative Polarität zu Beginn der ersten Lichtbogenperiode (Ta1) oder zu einem verzögerten Zeitpunkt (Tc) nach Beginn der ersten Lichtbogenperiode (Ta1) erfolgt.

3. Verfahren zur Steuerung eines Lichtbogenschweißens nach Anspruch 1, wobei die Umschaltung auf die elektroden-negative Polarität zu einem Zeitpunkt innerhalb der Kurzschlussperiode erfolgt.

4. Verfahren zur Steuerung eines Lichtbogenschweißens gemäß einem der Ansprüche 1 bis 3, wobei die Polaritätsumschaltung erfolgt, während der Absolutwert des Schweißstroms (Iw) gleich oder kleiner als ein Referenzwert ist.

## Revendications

1. Procédé de commande de soudage à l'arc comprenant :
la fourniture d'un fil de soudage (1) ; et
la répétition d'une période de court-circuit et d'une période d'arc, la période d'arc comprenant une première période d'arc (Ta1) et une seconde période d'arc (Ta2) à la suite de la première période d'arc (Ta1),
dans lequel un courant de soudage (Iw) est appliqué en utilisant une commande à courant constant au cours de la première période d'arc (Ta1),
le courant de soudage (Iw) est appliqué en utilisant une commande à tension constante au cours de la seconde période d'arc (Ta2), et
la première période d'arc (Ta1) est définie avec une polarité d'électrode négative et la seconde période d'arc (Ta2) est définie avec une polarité d'électrode positive au début de la seconde période d'arc (Ta2),
dans lequel le fil de soudage (1) est rétracté au cours de la période de court-circuit et avancé au cours de la période d'arc.

2. Procédé de commande de soudage à l'arc selon la revendication 1, dans lequel la commutation pour la polarité d'électrode négative est réalisée au début de la première période d'arc (Ta1) ou à un instant retardé (Tc) par rapport au début de la première période d'arc (Ta1).

3. Procédé de commande de soudage à l'arc selon la revendication 1, dans lequel la commutation pour la polarité d'électrode négative est réalisée à un certain instant au cours de la période de court-circuit.

4. Procédé de commande de soudage à l'arc selon l'une quelconque des revendications 1 à 3, dans lequel la commutation de polarité est réalisée lorsqu'une valeur absolue du courant de soudage (Iw) est inférieure ou égale à une valeur de référence.
